# EUROPEAN PATENT APPLICATION

(11) **EP 2 899 578 A1**
(43) Date of publication of application: **29.07.2015**
(21) Application number: 14152679.8
(22) Date of filing: 27.01.2014
(51) Int. Cl.: G02B 7/00, C09J 7/00, C09J 7/02

(54) **Display for special environments**

(71) Applicant: Barco NV, 8500 Kortrijk (BE)
(72) Inventor: Callens, Jonathan, 8550 Zwevegem (BE); Van Der Eecken, Niki, 8530 Harelbeke (BE)
(74) Representative: IPLodge bvba

(57) **Abstract**

The invention pertains to a display assembly (10) adapted for special environments comprising low temperatures and/or vibrational forces, the display comprising a stack of components including an optical component (25)and a non-optical component (27), wherein said optical component and said non-optical component are bonded to each other by means of a structure (26) comprising at least one semi-rigid material (33) with a glass transition temperature below minus 60 degrees Celsius, arranged between two pressure sensitive adhesives (32, 34) with glass transition temperatures below minus 60 degrees Celsius. Since the bond material remains in its ductile deformation zone over the entire target temperature range, it will be able take up the induced stress caused by for example different elongation of the materials and/or environmental vibration forces.

## Description

### Field of the invention

The present invention relates to displays adapted for or dedicated to special environments comprising low temperatures and vibrational forces as well as to methods of constructing such displays.

### Background

In order to improve light efficiency and uniformity of a display, a diffuser and a set of light enhancement foils (the so-called optical stack) are put in front of the light sources. These could for example be polymer substrates (PMMA, PC, ...) which are bonded to a backlight cavity, which could be a metallic part, for example aluminium. The bonds also seal the backlight cavity and protect it from polluting particles. The actual LCD (Liquid Crystal Display) device is often primarily made of glass and additional light enhancement films, as mentioned above, can be attached to the back of the LCD device. The display most often also comprises a cover glass that has to be attached to the front enclosure, which is often a metallic part, for example aluminium. Inherent to such a combination of different materials is the large difference in CTE (Coefficient of Thermal Expansion). With increasing display sizes, this effect will get more pronounced. When the display is submitted to temperature variations, the connected materials will elongate to a different amount and induce stress in all components.

There can be different failures of the display as a result. If the bonds remain rigid and intact, the sheets will deform and optical properties are lost. There can be a release between the bonds and the device components where polluting particles could enter and reside in the cavities between the sheets and disturb the optical path. If there is complete release of all bonding of a sheet, it could also be moved out of position with a further reduction of display functionality. A severe scenario in an environment where the temperature cycles between low and high values is that the low temperature makes the bond material collapse, e.g. due to brittleness. Shattered pieces of the bond material itself can then enter the cavities between the sheets, and when the temperature increases, the bond pieces can be reactivated and bond the sheets together in the middle of the active display area. This will result in bent optical sheets with reduced optical properties as well as areas of the display where the light is completely blocked. Vibrational forces can enhance any movement of polluting particles or pieces of collapsed bond material, not necessarily a result of having different CTE involved.

Conventional bonding systems for displays often comprise a single layer of acrylic based PSA's (Pressure Sensitive Adhesive). However, acrylic PSA has its Tg (glass transition temperature) at approximately -40°C, so below Tg the acrylic bonding cannot be guaranteed. Additional means of fixation would keep the optical stack in place, but it is possible that pieces of collapsed PSA could still enter the display cavities and bond sheets together in the active display area, as described above. Moreover will the more rigidly fixed optical sheets would deform under the stress with reduced display functionality as a result.

EP2141211A2 discloses a double-sided foam adhesive tape that is used to bond electronic components in a display. The tape has been given light absorbing properties in order to decrease light scattering.

The article *"Pressure sensitive adhesive for solar"* discloses how a single layer of silicone-based PSA is used to attach a PV (photovoltaic) cell to a substrate for low-temperature applications. The PSA is optically bonded to the PV cell (i.e. the PSA covers the full surface of the PV cell).

Neither of the cited texts *"Pressure sensitive adhesive for solar"* or EP2141211A2 teach how to avoid stress-induced failure of optical display components due to temperature variations.

### Disclosure of the invention

It is therefore an object of embodiments of the present invention to provide an alternative display adapted for or dedicated to special environments comprising low temperatures and/or vibrational forces as well as to provide an alternative method of constructing such displays.

An advantage of embodiments of the present invention is providing a solution to least one of the above mentioned problems.

In one aspect the present invention seeks to provide a display for special environments that comprise temperatures varying between up to 90 degrees above zero degree Celsius and minus 60 degrees Celsius, and various amounts of vibrational forces. Such an environment could for example be outdoor, aerospace or space, but does not have to be limited hereto. Embodiments of the invention may target other temperature ranges, depending on their intended application.

According to an aspect of the present invention, there is provided a display assembly comprising a stack of components including an optical component and a non-optical component, wherein said optical component and said non-optical component are connected to each other by means of a structure comprising at least one semi-rigid material with a glass transition temperature below minus 60 degrees Celsius, arranged between two pressure sensitive adhesives with glass transition temperatures below minus 60 degrees Celsius.

It is an advantage of the present invention that shear forces occurring between components in the stack, such as the shear forces induced by differences in thermal expansion coefficients, are absorbed at least in part by the semi-rigid material (for example of foam or sponge type, an elastic material, etc), which is bonded to the adjoining components by means of the pressure-sensitive adhesives. This avoids placing the burden of absorbing the shear forces fully on the layers of pressure sensitive adhesive.

The bond material remains in its ductile deformation zone over the entire target temperature range, which corresponds to the environmental conditions expected to occur in the applications of interest. Hence, it will be able take up the induced stress caused by for example different elongation of the materials and/or environmental vibration forces. Since it will provide an intact sealing there will be no foreign particles entering the cavity. Further, there will be no pieces of the bond material itself entering the cavity, thus, possibly re-bond of optical sheets is avoided.

In an embodiment of the display assembly according to the present invention, the optical component and the non-optical component have different thermal expansion coefficients.

It is useful that the different components of a display have different CTE. An exemplary CTE for the material of the optical component is 77×10⁻⁶ K⁻¹. An exemplary CTE for the material of the non-optical component is 24×10⁻⁶ K⁻¹. According to this example, assuming a maximum temperature deviation of 150 K and a component size of 300 mm × 200 mm, the bonding structure has to be able to absorb a relative movement of the joined portions of the respective components of approximately 2 mm. An adequate thickness of the semi-rigid material and the two layers of pressure-sensitive adhesive can be selected on the basis of this maximum relative movement.

In an embodiment of the display assembly according to the present invention, the structure is applied along an edge portion of the optical component and the non-optical component.

If the bonding material is not transparent it is preferred to apply it outside the active display area, in order to preserve the proper optical functioning of the optical component.

In an embodiment of the display assembly according to the present invention, said optical component, said non-optical component, and said structure form a sealed space. In a particular embodiment, the sealed space is filled with a gas other than air.

Various types of gas could be advantageous, for example, using a gas lighter than air gives a weight advantage or a gas with light scattering properties increases the optical performance or a gas with thermal conductivity increases the heat transfer rate.

In an embodiment of the display assembly according to the present invention, at least one of the pressure sensitive adhesives is based on silicone. In an embodiment of the display assembly according to the present invention, the semi-rigid material is based on silicone.

The inventors have found that a bond system based on Silicone PSA (Pressure Sensitive Adhesive) handles material elongations that differ by more than 2 mm at temperatures down to minus 60 degrees Celsius.

In an embodiment of the display assembly according to the present invention, said optical component is a diffuser that is made of polymer or glass.

These materials have appropriate properties for use as a diffuser.

According to an aspect of the invention, there is provided a method for producing a display assembly comprising a stack of components including an optical component and a non-optical component, the method comprising bonding said optical component and said non-optical component to each other by means of a structure, said structure comprising a semi-rigid material with a glass transition temperature below minus 60 degrees Celsius, arranged between two pressure sensitive adhesives with glass transition temperatures below minus 60 degrees Celsius.

The technical effects and advantages of the method according to the invention correspond *mutatis mutandis* to those of the corresponding display assembly according to the present invention.

### Brief description of drawings

These and other technical effects and advantages of the present invention will now be described in more detail with reference to the accompanying drawings, in which:
Figure 1 is an embodiment of the present invention;
Figure 2 is an alternative embodiment of the present invention;
Figure 3 is an embodiment of the present invention; and
Figure 4 illustrates the shear angle in an embodiment of the present invention.

### Detailed description

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. Where the term "comprising" is used in the present description and claims, it does not exclude other elements or steps. Where an indefinite or definite article is used when referring to a singular noun e.g. "a" or "an", "the", this includes a plural of that noun unless something else is specifically stated. The term "comprising", used in the claims, should not be interpreted as being restricted to the means listed thereafter; it does not exclude other elements or steps.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Moreover, the terms top, bottom, horizontal, vertical and the like in the description and the claims are used usually to describe a carpet that is laid horizontally unless another meaning is assigned to them.

In the drawings, like reference numerals indicate like features; and, a reference numeral appearing in more than one figure refers to the same element.

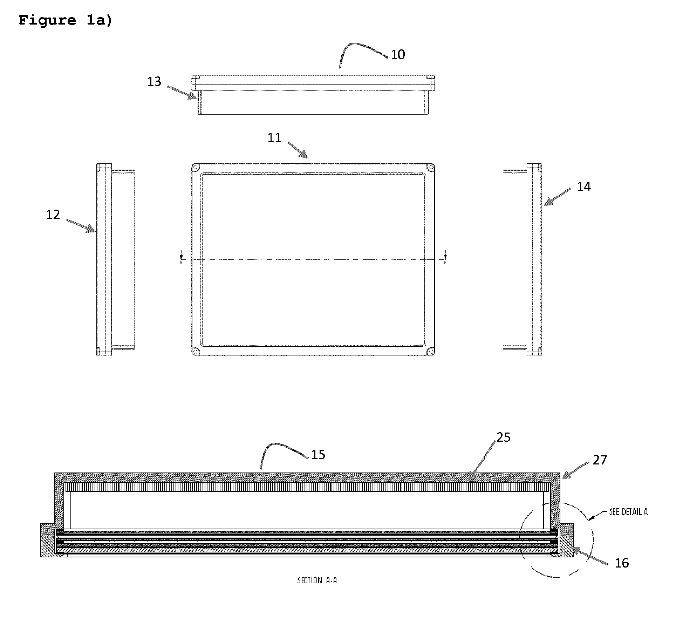

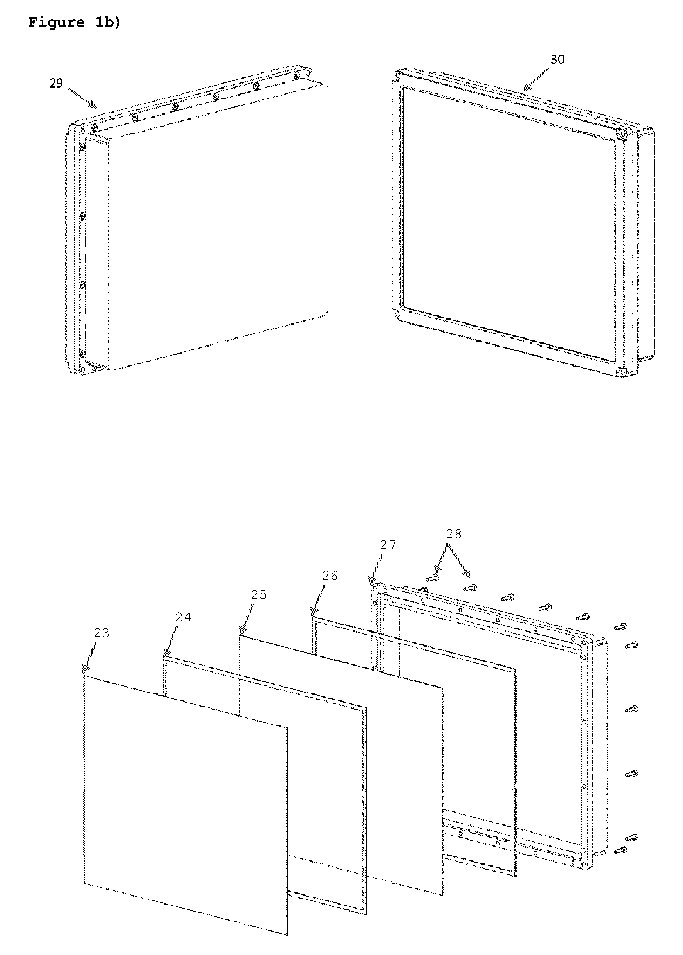

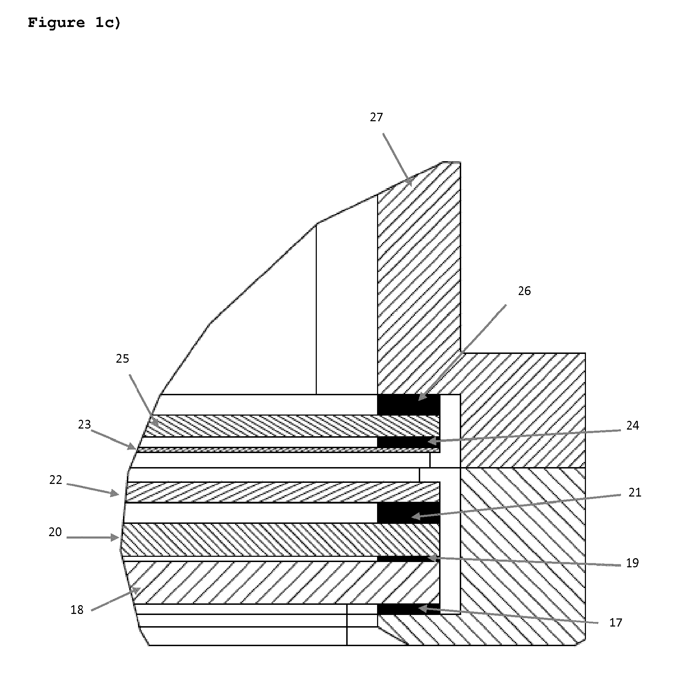

Figure 1 shows a schematic drawing of the display structure **10** according to an embodiment of the present invention. The invention refers to a display for special environments such as for example outdoor in especially cold climates, aeronautic or space environments. The display device comprises illumination systems where optical sheets are added to improve the illumination properties, for example direct backlight illumination or edge-lit illumination.

The present exemplary embodiment comprises a display that is divided in a front- and a back half due to assembly conditions. Figure 1a shows a perpendicular view of the front side **11** of the display **10**, three perpendicular side views **11**, **12** and **13**, a cross section **15,** and the front side half of the display, comprising layered components **16-22.** Figure 1b shows the backside **29** and front side **30** in perspective, and the backside half of the display, comprising layered components **23-28.** There is no exact geometrical symmetry in the division between the two halves. Figure 1c shows an enlarged part of **15** where it is shown how the different layers are assembled in the display.

In figure 1a) the display front side part starts with the mechanical housing **16** comprising a single or multiple entity metal or polymer part with structural integrity sufficient to handle the conditions for the display in question. Next follows a pressure sensitive adhesive system, or a "PSA" system **17.** All PSA systems of the present embodiment comprise at least one sandwich structure where two PSA's are enclosing a semi-rigid material or carrier, for example of foam or sponge type. Since the sandwiched structure contains an additional mechanical structure, the overall system provides an increased ability to take up shear forces. In a generalised case it is of course possible to have a multilayer construction with several semi-rigid carriers sandwiched between a plurality of PSA's. Both the single and multiple sandwiched PSA system have adhesive surfaces on both outer sides, so that the PSA system will bond with the optical sheet that faces each surface. The PSA systems are opaque and located on a limited portion of the rim of the display. In this way, they only occupy non-active parts of the display.

With a view to being used in low-temperature applications, this system in particular comprises materials with a low glass transition temperature. The inventors have found that a system comprising a silicone-based PSA can exhibit a glass transition temperature (Tg) below -60°C and can be suitable for the present invention. In a general case it is appropriate to use materials with a Tg suitable for the temperature range of the application. The semi-rigid carrier could have a foam- or sponge like character and should preferably have a Tg below -60°C. An example of such material could be COHRlastic from Stockwell Elastomerics. It is important that the bonding system is able to cover the difference in elongation of the materials involved at the temperature shifts involved. The inventors have found that such differences can be of more than 2 mm in a typical display system.

Now follows a cover glass **18** which can be of glass or polymer or any other material with suitable optical properties. This is followed by a PSA system **17** that bonds with the cover glass **18** and the front mechanical housing **16.** A second single or multiple PSA system **19** then follows and after this a display device **20** so that **19** bonds to **18** and **20.** The display device can be of various types, for example liquid crystal display (LCD), a display with organic light emitting diodes (OLED),... The efficiency and uniformity of the backlight is increased by using light enhancement foils. Such foils could for example be made of polymer substrates (PMMA, PC, ...) or any other material with appropriate optical properties. A PSA system **21** is put after **20,** followed by a light enhancement foil **22.** In this specific embodiment there is no further PSA system put behind **22.** The number of PSA systems and components in the stack is only exemplary, and without loss of generality.

The display backside half is illustrated by Figure 1b). The first part is the backlight housing **27,** which comprises single or multiple entity of metal or polymer. The backlight housing **27** also includes a light source device (not shown here). After **27** follows a PSA system **26** and an optical film **25,** another PSA system **24** and the last light enhancement foil **23.** The optical film **25** could be a diffuser plate that increases light spread to get a more homogeneous illumination. **25** could comprise at least one glass and/or polymer optical components. In the illustrated embodiment there is no further PSA system after foil **23.** Again, The number of PSA systems and components in the stack is only exemplary, and without loss of generality.

The two half parts of the display **10** are now put together so that the optical films **22** and **23** are in contact over their entire surfaces, and the display is fixated with the screws **28** (all screws in Figure 1b) are the same as **28).**

An optical film **25** can comprise at least one glass and/or polymer optical component. It is attached to the front part of the display stack via PSA system **24** and to the back light housing **27** via PSA system **26.** In many cases **25** is a diffuser plate that increases the light spread. The backlight housing **27** comprises a single or multiple entity of metal or polymer and it also includes a light source device. The front mechanical housing **16** and backlight housing **27** are mechanically fixed together with the screws **28.** The housings **16** and **27** can for example be of aluminium or any other suitable material. For aerospace applications it is generally especially important to choose lightweight materials.

The optical sheets **22, 23** and **25** shield off the cavity of the backlight housing **27** and prevent dust and humidity to enter the display stack.

Figure 1c) shows an enlarged cross-section of a corner of the display, where all materials meet.

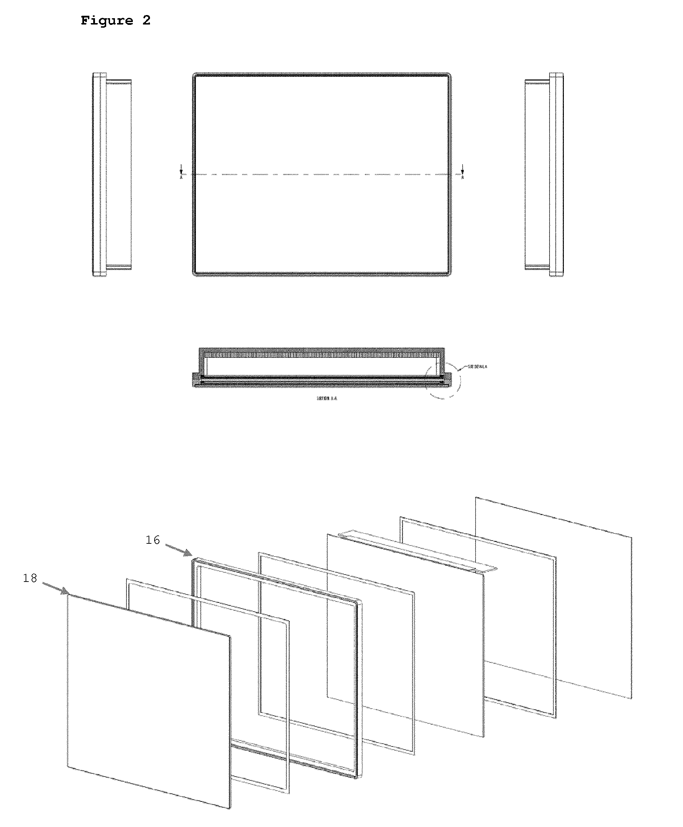

Figure 2 illustrates the front half of an alternative embodiment of the present invention. It is similar to Figure 1 but the mechanical housing **16** has switched places with the cover glass **18,** so that the cover glass is the outwards facing component of the front side half of the display. This could be used for example to achieve a reduced thickness of the bezel (e.g. to reduce weight) and for touchscreen displays.

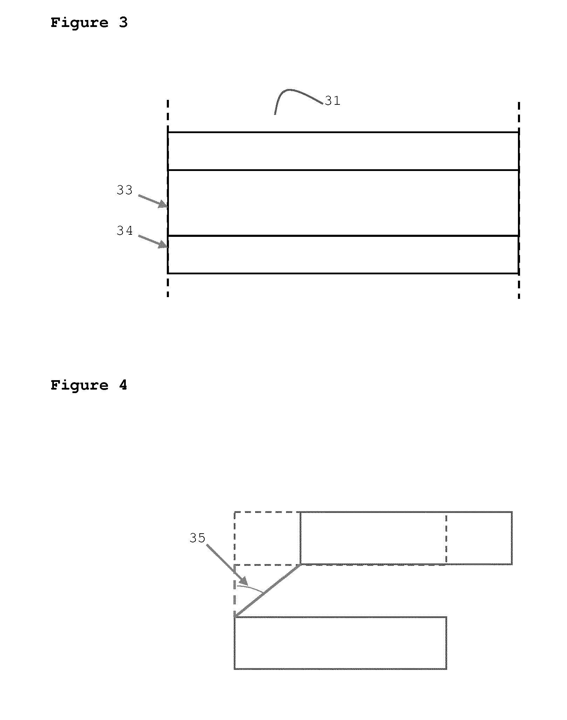

Figure 3 shows a general example of the PSA sandwich structure **31.** The semi-rigid material **33** is surrounded by PSA layers **32** and **34.** The PSA layers can be of identical type or they can be of different type. It is possible to continue this layering of materials so that a multi-layer structure is created. Such a structure could contain a mix of semi-rigid material types as well as a mix of PSA types.

Using different types of semi-rigid materials gives the possibility to build sandwich layers of certain thicknesses. Figure 1c illustrates how PSA layers **17, 19, 21, 24** and **26** are of different thickness. Since the PSA sandwich structure is actually also a spacer it is possible to adapt the thickness so that the distance between two layers matches an optical condition. For example, in a particular case it could be preferable to have the diffuser plate close to the light source in order to get a large view angle. This is in particular important for the field of avionic displays where a pilot might need to have full vision of a display of another pilot, in case of failure of his own display. With thinner spacer tape the whole display stack also gets thinner and weight is reduced, which is important for avionics applications.

Figure 4 shows how a shear angle **35** is created when the upper block slides to the right in respective to the lower block. The inventors have found that the shear angle for a typical embodiment of the present invention should be kept below 45 degrees in order to not put too much stress on the components. With this limitation, an appropriate material (and thickness) can be chosen.

Some further advantages can be obtained with the present invention, depending on material choice. Electromagnetic interference can interrupt, obstruct or otherwise degrade the performance of the display device. This is especially important for aerospace- and space applications. That is why the front glass of a conventional display typically includes a conductive layer that makes contact with the chassis of the display device to shield the inside of the device from any harmful electromagnetic radiation (or vice versa). If a silicone-based PSA system is used, it is possible to choose an electrically conductive silicone carrier and the additional conductive layer can be omitted. For applications where heat should be drained, a silicone carrier with thermal conductivity can be used. Both cases will still have the advantages of flexible joints.

While the invention has been described hereinabove with reference to specific embodiments, this is only done to illustrate and not to limit the invention, the scope of which shall be determined in accordance with the accompanying claims. The skilled reader shall appreciate that elements and features described only in connection with method embodiments, may be used in apparatus embodiments with the same technical effects and advantages, and vice versa.

## Claims

1. A display assembly comprising a stack of component including an optical component and a non-optical component, wherein said optical component and said non-optical component are connected to each other by means of a structure comprising at least one semi-rigid material with a glass transition temperature below minus 60 degrees Celsius, arranged between two pressure sensitive adhesives with glass transition temperatures below minus 60 degrees Celsius.

2. The display assembly according to claim 1, wherein the optical component and the non-optical component have different thermal expansion coefficients.

3. The display assembly according to any of the preceding claims, wherein the structure is applied along an edge portion of the optical component and the non-optical component.

4. The display assembly according to any of the preceding claims, wherein said optical component, said non-optical component, and said structure form a sealed space.

5. The display assembly according to claim 4, wherein the sealed space is filled with a gas other than air.

6. The display assembly according to any of the preceding claims, wherein at least one of the pressure sensitive adhesives is based on silicone.

7. The display assembly according to any of the preceding claims, wherein the semi-rigid material is based on silicone.

8. The display assembly according to any of the preceding claims, wherein said optical component is a diffuser that is made of polymer or glass.

9. A method of producing a display assembly comprising a stack of components including an optical component and a non-optical component, the method comprising bonding said optical component and said non-optical component to each other by means of a structure, said structure comprising a semi-rigid material with a glass transition temperature below minus 60 degrees Celsius, arranged between two pressure sensitive adhesives with glass transition temperatures below minus 60 degrees Celsius.

10. The method according to claim 9, wherein the optical component and the non-optical component have different thermal expansion coefficients.

11. The method according claim 9 or 10, further comprising applying the structure along an edge portion of the optical component and the non-optical component.

12. The method according to any of the claims 9 to 11, further comprising forming a sealed space from said optical component, said non-optical component, and said structure.

13. The method according to claim 12, further comprising filling the sealed space with a gas other than air.

14. The method according to any of the claims 9 to 13, wherein at least one of the pressure sensitive adhesives is based on silicone.

15. The method according to any of the claims 9 to 14, wherein the semi-rigid material is based on silicone.
